(19) Europäisches Patentamt / European Patent Office / Office européen des brevets

(11) **EP 4 769 629 A1**

(12) **EUROPEAN PATENT APPLICATION**
published in accordance with Art. 153(4) EPC

(43) Date of publication:
01.07.2026 Bulletin 2026/27

(21) Application number: 25867274.0

(22) Date of filing: 08.09.2025

(51) International Patent Classification (IPC):
$H01M\ 10/0569^{(2010.01)}$  $H01M\ 10/0567^{(2010.01)}$
$H01M\ 10/42^{(2006.01)}$  $H01M\ 10/0525^{(2010.01)}$

(52) Cooperative Patent Classification (CPC):
Y02E 60/10

(86) International application number:
PCT/CN2025/119709

(87) International publication number:
WO 2026/081723 (23.04.2026 Gazette 2026/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.06.2025 CN 202510742268

(71) Applicant: Eve Power Co., Ltd.
Jingmen, Hubei 448000 (CN)

(72) Inventors:
• CHEN, Ruoling
448000 Hubei (CN)
• HUANG, Chengjie
448000 Hubei (CN)
• WANG, Kai
448000 Hubei (CN)
• ZHU, Weihua
448000 Hubei (CN)

(74) Representative: Regimbeau
20, rue de Chazelles
75847 Paris Cedex 17 (FR)

(54) **ELECTROLYTE AND PREPARATION METHOD THEREFOR, LITHIUM BATTERY AND ELECTRIC DEVICE**

(57) The present application provides an electrolyte, a preparation method therefor, a lithium battery, and an electric device. The electrolyte includes a lithium salt, a solvent, and a film-forming additive, where the solvent includes a low-viscosity solvent having a viscosity of 0.50 mPa·s or less, and the electrolyte meets $0.35 \leq \frac{100*PD*A_{dd}}{W} \leq 1.30$ , where based on the mass of the solvent being 100%, W is the mass fraction of the low-viscosity solvent in the solvent, in units of wt%, and $A_{dd}$ is the ratio of the mass of the film-forming additive in the electrolyte to the total mass of the lithium salt and the solvent. For positive electrode sheets with different compaction densities, the contents of the low-viscosity solvent and the film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, and the lithium battery also demonstrates excellent cycling stability.

EP 4 769 629 A1

## Description

This application claims priority to Chinese Patent Application No. 202510742268.0 filed with the China National Intellectual Property Administration (CNIPA) on Jun. 4, 2025, the disclosure of which is incorporated herein by reference in its entirety.

## TECHNICAL FIELD

The present application belongs to the technical field of batteries and relates to an electrolyte, specifically, an electrolyte, a preparation method therefor, a lithium battery, and an electric device.

## BACKGROUND

Increasing the compaction density of the lithium iron manganese phosphate positive electrode sheet is an important technical approach for enhancing the energy density of batteries. However, after the compaction density of the lithium iron manganese phosphate positive electrode sheet is increased, it becomes significantly more difficult for the electrolyte to infiltrate the electrode sheet. Moreover, with the increased compaction density, the porosity of the cathode material in the lithium iron manganese phosphate positive electrode sheet decreases, and the pore structure becomes denser, which makes the penetration path of the electrolyte within the lithium iron manganese phosphate positive electrode sheet more complex and conventional electrolyte solvents with high surface tension often struggle to fully infiltrate the three-dimensional network structure formed by active substances and conductive agents.

Therefore, introducing ethyl acetate (EA) with lower viscosity as a co-solvent into the electrolyte can reduce the dynamic viscosity of the electrolyte system. Ethyl acetate has a low surface tension and thus significantly improves the wettability of the electrolyte on the high-compaction lithium iron manganese phosphate positive electrode sheet, thereby effectively avoiding defects such as increased interfacial impedance and poor lithium-ion transport performance due to insufficient infiltration. However, at high temperatures, ethyl acetate decomposes and produces acidic substances, and the acidic substances can damage the cathode electrolyte interphase (CEI) film and the anode solid electrolyte interphase (SEI) film, thereby leading to cycle attenuation of the battery. Therefore, it is necessary to add suitable film-forming additives to the electrolyte to form more stable CEI and SEI films, thereby improving high-temperature cycling performance.

CN119230914A discloses a lithium iron phosphate battery. The lithium iron phosphate battery includes a positive electrode, a negative electrode, a separator, and an electrolyte; the main material of the positive electrode includes lithium iron phosphate, and the main material of the negative electrode includes graphite and a silicon-based material; the areal density of the positive electrode is $\geq 23$ mg/cm$^2$, and the areal density of the negative electrode is $\geq 7.8$ mg/cm$^2$; the electrolyte includes a lithium salt, a solvent, and an additive; the solvent mainly includes ethylene carbonate and a small-molecule linear solvent; the additive includes FEC and a negative electrode film-forming additive; the negative electrode film-forming agent includes vinylene carbonate and a lithium salt additive; the mass fraction of the small-molecule linear solvent is 35%-60%, the mass fraction of fluoroethylene carbonate is M, the mass fraction of the silicon element in the negative electrode layer is W1, $2\% \leq M \leq 2 \times W1$, and the mass fraction of the negative electrode film-forming agent is 4%-6%.

CN116259834A discloses a 12V auxiliary battery and an electrolyte thereof. The electrolyte includes a lithium salt, an organic solvent, and an additive; the lithium salt accounts for 14%-20% by weight and consists of lithium hexafluorophosphate and lithium bis(fluorosulfonyl)imide, and the molar ratio of lithium hexafluorophosphate to lithium bis(fluorosulfonyl)imide is 0.5:1-2.0:1; the organic solvent consists of at least one of ethylene carbonate, methyl ethyl carbonate, or dimethyl carbonate; the additive consists of at least one of lithium difluoro(oxalato)borate, lithium difluorophosphate, or vinylene carbonate, and the additive accounts for 0.2%-0.5% by weight.

## TECHNICAL PROBLEM

However, in the technical solutions disclosed in the related art, it is difficult to match an electrolyte with appropriate contents of a film-forming additive and a low-viscosity solvent according to positive electrode sheets with different compaction densities, which makes it challenging to simultaneously ensure good wettability of the electrolyte on the positive electrode sheet (that is, to avoid increased interfacial impedance and degraded lithium-ion transport performance) and to enhance the high-temperature cycling stability of the battery. Therefore, a new electrolyte, a preparation method therefor, a lithium battery, and an electric device need to be developed and designed.

TECHNICAL SOLUTION

The present application provides an electrolyte, a preparation method therefor, a lithium battery, and an electric device. In the electrolyte provided by the present application, the electrolyte meets $0.35 \leq \frac{100*PD*A_{dd}}{W} \leq 1.30$. For positive electrode sheets with different compaction densities, the contents of a low-viscosity solvent and a film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, that is, the lithium battery has lower interface impedance and better lithium-ion transport performance, and the lithium battery also demonstrates excellent high-temperature cycling stability.

In a first aspect, the present application provides an electrolyte. The electrolyte includes a lithium salt, a solvent, and a film-forming additive. The solvent includes a low-viscosity solvent having a viscosity of 0.50 mPa·s or less.

The electrolyte meets $0.35 \leq \frac{100*PD*A_{dd}}{W} \leq 1.30$, where PD is 2.1-2.6, and PD is the compaction density value of a positive electrode sheet in a lithium battery matched with the electrolyte, and the unit of the compaction density is g/cm$^3$.

Based on the mass of the solvent being 100%, W is the mass fraction of the low-viscosity solvent in the solvent, in units of wt%, and $A_{dd}$ is the ratio of the mass of the film-forming additive in the electrolyte to the total mass of the lithium salt and the solvent.

In the electrolyte provided by the present application, the electrolyte meets $0.35 \leq \frac{100*PD*A_{dd}}{W} \leq 1.30$. In the present application, by controlling the contents of the low-viscosity solvent and the film-forming additive in the electrolyte, when the electrolyte is applied to lithium batteries, especially those with high-compaction-density positive electrode sheets, the electrolyte exhibits good wettability on the positive electrode sheet, thereby enabling the lithium battery to have lower interface impedance, better lithium-ion transport performance, and excellent high-temperature cycling stability.

Optionally, the electrolyte meets $0.39 \leq \frac{100*PD*A_{dd}}{W} \leq 0.73$.

Optionally, $0.087 \leq PD:W \leq 0.420$, and optionally, $0.100 \leq PD:W \leq 0.220$.
Optionally, $0.0014 \leq A_{dd}:W \leq 0.0062$, and optionally, $0.0016 \leq A_{dd}:W \leq 0.0033$.
Optionally, PD is 2.2-2.5.
Optionally, W is 5-30, and optionally, is 10-25.
Optionally, $A_{dd}$ is 0.031-0.041, and optionally, is 0.033-0.039.
Optionally, the lithium salt includes LiPF$_6$ and LiFSI.
Optionally, the concentration of LiPF$_6$ in the electrolyte is 0.3-1 mol/L, and the concentration of LiFSI is 0.3-1 mol/L.
Optionally, the film-forming additive includes vinylene carbonate.
Optionally, the film-forming additive further includes any one or a combination of at least two of fluoroethylene carbonate, lithium difluoro(oxalato)borate, or ethylene sulfate.
Optionally, based on the mass of the film-forming additive being 100%, in the film-forming additive, the mass fraction of vinylene carbonate is 46.5%-100%, the mass fraction of fluoroethylene carbonate is not higher than 18.6 wt%, the mass fraction of lithium difluoro(oxalato)borate is not higher than 11.6 wt%, and the mass fraction of ethylene sulfate is not higher than 23.3 wt%.
Optionally, the low-viscosity solvent has a viscosity of 0.40-0.50 mPa·s.
Optionally, the low-viscosity solvent includes any one or a combination of at least two of ethyl acetate, methyl propionate, or ethyl propionate.
Optionally, the solvent further includes a main solvent, and the main solvent includes ethylene carbonate.
Optionally, the main solvent further includes any one or a combination of at least two of propylene carbonate, methyl ethyl carbonate, or dimethyl carbonate.
Optionally, based on the mass of the main solvent being 100%, in the main solvent, the mass fraction of ethylene carbonate is 18.2-100 wt%, the mass fraction of propylene carbonate is not higher than 9.0 wt%, the mass fraction of methyl ethyl carbonate is not higher than 36.4 wt%, and the mass fraction of dimethyl carbonate is not higher than 36.4 wt%.

In a second aspect, the present application provides a method for preparing the electrolyte described in the first aspect. The preparation method includes the following steps:

mixing a lithium salt, a low-viscosity solvent, a main solvent, and a film-forming additive to obtain the electrolyte.

Optionally, the preparation method includes: subjecting the low-viscosity solvent and the main solvent to first mixing to obtain a solvent; subjecting the obtained solvent and the lithium salt to second mixing to obtain a preliminary electrolyte; and subjecting the obtained preliminary electrolyte and the film-forming additive to third mixing to obtain the electrolyte.

In a third aspect, the present application provides a lithium battery. The lithium battery includes the electrolyte described in the first aspect.

The electrolyte meets $0.35 \leq \dfrac{100 * PD * A_{dd}}{W} \leq 1.30$.

The electrolyte in the lithium battery provided by the present application meets $0.35 \leq \dfrac{100 * PD * A_{dd}}{W} \leq 1.30$. For positive electrode sheets with different compaction densities, the contents of a low-viscosity solvent and a film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, that is, the lithium battery has lower interface impedance and better lithium-ion transport performance, and the lithium battery also demonstrates excellent high-temperature cycling stability.

Optionally, the positive electrode active material in the positive electrode sheet of the lithium battery includes lithium iron manganese phosphate, and the single-sided areal density of the positive electrode sheet is 200-260 g/m², and optionally, is 210-250 g/m².

Optionally, the negative electrode sheet of the lithium battery includes a graphite negative electrode, and the graphite negative electrode has a compaction density of 1.55-1.75 g/cm³ and a single-sided areal density of 80-110 g/m².

Optionally, the injection coefficient of the electrolyte is 3.0-5.0 g/Ah, and optionally, is 3.5-4.5 g/Ah.

In a fourth aspect, the present application provides an electric device. The electric device includes the lithium battery described in the third aspect.

Any numerical range in the present application includes not only the above-listed point values but also any point values unlisted within the numerical range. Due to the limitation of space and the consideration of simplicity, specific point values included in the range are not exhaustively listed in the present application.

BENEFICIAL EFFECT

Compared with the related art, the present application has the following beneficial effects.

(1) In the electrolyte provided by the present application, the electrolyte meets $0.35 \leq \dfrac{100 * PD * A_{dd}}{W} \leq 1.30$. In the present application, by controlling the contents of the low-viscosity solvent and the film-forming additive in the electrolyte, when the electrolyte is applied to lithium batteries, especially those with high-compaction-density positive electrode sheets, the electrolyte exhibits good wettability on the positive electrode sheet, thereby enabling the lithium battery to have lower interface impedance, better lithium-ion transport performance, and excellent high-temperature cycling stability.

(2) The electrolyte in the lithium battery provided by the present application meets $0.35 \leq \dfrac{100 * PD * A_{dd}}{W} \leq 1.30$.

For positive electrode sheets with different compaction densities, the contents of the low-viscosity solvent and the film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, that is, the lithium battery has lower interface impedance and better lithium-ion transport performance, and the lithium battery also demonstrates excellent high-temperature cycling stability.

Other aspects can be understood after the detailed description is read and understood.

DETAILED DESCRIPTION

Technical solutions of the present application are further described below through specific embodiments. It is to be understood by those skilled in the art that the embodiments are only intended to facilitate understanding of the present application and are not to be construed as limiting the present application.

In an implementation, the present application provides an electrolyte. The electrolyte includes a lithium salt, a solvent, and a film-forming additive. The solvent includes a low-viscosity solvent having a viscosity of 0.50 mPa·s or less.

The electrolyte meets $0.35 \leq \frac{100*PD*A_{dd}}{W} \leq 1.30$, where PD is 2.1-2.6, and PD is the compaction density value of a positive electrode sheet in a lithium battery matched with the electrolyte, and the unit of the compaction density is g/cm$^3$.

Based on the mass of the solvent being 100%, W is the mass fraction of the low-viscosity solvent in the solvent, in units of wt%, and $A_{dd}$ is the ratio of the mass of the film-forming additive in the electrolyte to the total mass of the lithium salt and the solvent.

In the present application, the low-viscosity solvent refers to an organic solvent with relatively low viscosity in the electrolyte (including ethyl acetate, methyl propionate, ethyl propionate, and the like). The low-viscosity solvent can reduce the overall viscosity of the electrolyte and improve lithium-ion mobility and electrolyte permeability, thereby enhancing the electrochemical performance of the lithium battery.

The electrolyte provided by the present application meets $0.35 \leq \frac{100*PD*A_{dd}}{W} \leq 1.30$. $\frac{100*PD*A_{dd}}{W}$, for example, may be, but is not limited to, 0.35, 0.40, 0.45, 0.50, 0.60, 0.70, 0.80, 0.90, 1.00, 1.10, 1.20 or 1.30. Unlisted values within this range are also applicable.

In the present application, PD is 2.1-2.6, for example, but not limited to, 2.1, 2.15, 2.2, 2.25, 2.3, 2.35, 2.4, 2.45, 2.5, 2.55 or 2.6. Unlisted values within this range are also applicable.

In the electrolyte provided by the present application, the electrolyte meets $0.35 \leq \frac{100*PD*A_{dd}}{W} \leq 1.30$. In the present application, by controlling the contents of the low-viscosity solvent and the film-forming additive in the electrolyte, when the electrolyte is applied to lithium batteries, especially those with high-compaction-density positive electrode sheets, the electrolyte exhibits good wettability on the positive electrode sheet, thereby enabling the lithium battery to have lower interface impedance, better lithium-ion transport performance, and excellent high-temperature cycling stability.

In some embodiments, the electrolyte meets $0.39 \leq \frac{100*PD*A_{dd}}{W} \leq 0.73$. $\frac{100*PD*A_{dd}}{W}$, for example, may be, but is not limited to, 0.39, 0.42, 0.45, 0.48, 0.51, 0.54, 0.57, 0.60, 0.63, 0.66, 0.69, 0.72 or 0.73. Unlisted values within this range are also applicable.

In some embodiments, 0.087 ≤ PD:W ≤ 0.420. PD:W, for example, may be, but is not limited to, 0.087, 0.100, 0.120, 0.150, 0.180, 0.200, 0.220, 0.250, 0.280, 0.300, 0.320, 0.350, 0.380, 0.400 or 0.420. Unlisted values within this range are also applicable. Optionally, 0.100 ≤ PD:W ≤ 0.220.

In the present application, when 0.087 ≤ PD:W, the excessive low-viscosity solvent is avoided, thereby preventing the poor dissociation capacity of the lithium salt due to the low dielectric constant of the low-viscosity solvent and high oxidative decomposition caused by the weak antioxidant capacity of the low-viscosity solvent. When PD:W ≤ 0.420, the low-viscosity solvent can sufficiently reduce the viscosity of the electrolyte, thereby improving the infiltration effect of the electrolyte on the positive electrode sheet, reducing the interfacial impedance in the electrolyte, and enhancing lithium-ion transport performance.

In some embodiments, 0.0014 ≤ $A_{dd}$:W ≤ 0.0062. $A_{dd}$:W, for example, may be, but is not limited to, 0.0013, 0.0015, 0.0020, 0.0025, 0.0030, 0.0035, 0.0040, 0.0045, 0.0050, 0.0055, 0.0060 or 0.0062. Unlisted values within this range are also applicable. Optionally, 0.0016 ≤ $A_{dd}$:W ≤ 0.0033.

In the present application, when 0.0014 ≤ $A_{dd}$:W ≤ 0.0062, the electrolyte exhibits more excellent cycling performance, because when the value of $A_{dd}$:W is within this range, the additive amount of the film-forming additive is appropriate, which can form more stable CEI and SEI films to improve high-temperature cycling performance, enable the CEI and SEI films to have suitable thicknesses to maintain good lithium-ion transport performance of the electrolyte, and help reduce the production cost of the electrolyte.

In some embodiments, PD is 2.2-2.5, for example, but not limited to, 2.2, 2.22, 2.24, 2.26, 2.28, 2.3, 2.32, 2.34, 2.36, 2.38, 2.4, 2.42, 2.44, 2.46, 2.48 or 2.5. Unlisted values within this range are also applicable.

In some embodiments, W is 5-30, for example, but not limited to, 5, 6, 8, 10, 12, 15, 18, 20, 22, 25, 28 or 30. Unlisted values within this range are also applicable. Optionally, W is 10-25.

In some embodiments, $A_{dd}$ is 0.031-0.041, for example, but not limited to, 0.031, 0.032, 0.033, 0.034, 0.035, 0.036, 0.037, 0.038, 0.039, 0.040 or 0.041. Unlisted values within this range are also applicable. Optionally, $A_{dd}$ is 0.033-0.039.

In some embodiments, the lithium salt includes $LiPF_6$ and LiFSI.

In some embodiments, the concentration of $LiPF_6$ in the electrolyte is 0.3-1 mol/L, and the concentration of LiFSI is 0.3-1 mol/L.

In the present application, the concentration of $LiPF_6$ in the electrolyte is 0.3-1 mol/L, for example, but not limited to, 0.3 mol/L, 0.4 mol/L, 0.5 mol/L, 0.6 mol/L, 0.7 mol/L, 0.8 mol/L, 0.9 mol/L or 1 mol/L.

In the present application, the concentration of LiFSI in the electrolyte is 0.3-1 mol/L, for example, but not limited to, 0.3 mol/L, 0.4 mol/L, 0.5 mol/L, 0.6 mol/L, 0.7 mol/L, 0.8 mol/L, 0.9 mol/L or 1 mol/L.

In some embodiments, the film-forming additive includes vinylene carbonate.

In some embodiments, the film-forming additive further includes any one or a combination of at least two of fluoroethylene carbonate, lithium difluoro(oxalato)borate, or ethylene sulfate. A typical but non-limiting combination includes a combination of fluoroethylene carbonate and lithium difluoro(oxalato)borate, a combination of lithium difluoro(oxalato)borate and ethylene sulfate, a combination of fluoroethylene carbonate and ethylene sulfate, or a combination of fluoroethylene carbonate, lithium difluoro(oxalato)borate and ethylene sulfate.

In some embodiments, based on the mass of the film-forming additive being 100%, in the film-forming additive, the mass fraction of vinylene carbonate is 46.5%-100%, the mass fraction of fluoroethylene carbonate is not higher than 18.6 wt%, the mass fraction of lithium difluoro(oxalato)borate is not higher than 11.6 wt%, and the mass fraction of ethylene sulfate is not higher than 23.3 wt%.

In the present application, based on the mass of the film-forming additive being 100%, the mass fraction of vinylene carbonate in the film-forming additive is 46.5%-100%, for example, but not limited to, 46.5%, 50%, 55%, 60%, 65%, 70%, 75%, 80%, 85%, 90%, 95% or 100%. Unlisted values within this range are also applicable.

In the present application, based on the mass of the film-forming additive being 100%, the mass fraction of fluoroethylene carbonate in the film-forming additive is not higher than 18.6 wt%, for example, but not limited to, 0.1 wt%, 1 wt%, 3 wt%, 5 wt%, 8 wt%, 10 wt%, 12 wt%, 15 wt%, 18 wt% or 18.6 wt%. Unlisted values within this range are also applicable.

In the present application, based on the mass of the film-forming additive being 100%, the mass fraction of lithium difluoro(oxalato)borate in the film-forming additive is not higher than 11.6 wt%, for example, but not limited to, 0.1 wt%, 1 wt%, 2 wt%, 3 wt%, 5 wt%, 7 wt%, 9 wt%, 10 wt%, 11 wt% or 11.6 wt%. Unlisted values within this range are also applicable.

In the present application, based on the mass of the film-forming additive being 100%, the mass fraction of ethylene sulfate in the film-forming additive is not higher than 23.3 wt%, for example, but not limited to, 0.1 wt%, 2 wt%, 5 wt%, 8 wt%, 10 wt%, 12 wt%, 15 wt%, 18 wt%, 20 wt%, 22 wt% or 23.3 wt%. Unlisted values within this range are also applicable.

In some embodiments, the low-viscosity solvent has a viscosity of 0.40-0.50 mPa·s, for example, but not limited to, 0.40 mPa·s, 0.41 mPa·s, 0.42 mPa·s, 0.43 mPa·s, 0.44 mPa·s, 0.45 mPa·s, 0.46 mPa·s, 0.47 mPa·s, 0.48 mPa·s, 0.49 mPa·s or 0.50 mPa·s. Unlisted values within this range are also applicable.

In the present application, when the low-viscosity solvent has a viscosity of 0.40-0.50 mPa·s, by optimizing the ion transport, interfacial wettability, and solvation structure, high ionic conductivity, low interfacial impedance, and stability over a wide temperature range of the electrolyte are achieved, thereby improving the rate performance and high-temperature cycling performance of the battery. The above viscosity range represents the optimal window for balancing kinetics and thermodynamics.

In some embodiments, the low-viscosity solvent includes any one or a combination of at least two of ethyl acetate, methyl propionate, or ethyl propionate. A typical but non-limiting combination includes a combination of ethyl acetate and methyl propionate, a combination of methyl propionate and ethyl propionate, a combination of ethyl acetate and ethyl propionate, or a combination of ethyl acetate, methyl propionate and ethyl propionate.

In some embodiments, the solvent further includes a main solvent, and the main solvent includes ethylene carbonate.

In some embodiments, the main solvent further includes any one or a combination of at least two of propylene carbonate, methyl ethyl carbonate, or dimethyl carbonate. A typical but non-limiting combination includes a combination of propylene carbonate and methyl ethyl carbonate, a combination of methyl ethyl carbonate and dimethyl carbonate, a combination of propylene carbonate and dimethyl carbonate, or a combination of propylene carbonate, methyl ethyl carbonate and dimethyl carbonate.

In some embodiments, based on the mass of the main solvent being 100%, in the main solvent, the mass fraction of ethylene carbonate is 18.2-100 wt%, the mass fraction of propylene carbonate is not higher than 9.0 wt%, the mass fraction of methyl ethyl carbonate is not higher than 36.4 wt%, and the mass fraction of dimethyl carbonate is not higher than 36.4 wt%.

In the present application, based on the mass of the solvent being 100%, the mass fraction of ethylene carbonate in the solvent is 18.2-100 wt%, for example, but not limited to, 18.2 wt%, 20 wt%, 25 wt%, 30 wt%, 40 wt%, 50 wt%, 60 wt%, 70 wt%, 80 wt%, 90 wt% or 100 wt%. Unlisted values within this range are also applicable.

In the present application, based on the mass of the solvent being 100%, the mass fraction of propylene carbonate in the solvent is not higher than 9.0 wt%, for example, but not limited to, 0.1 wt%, 1 wt%, 2 wt%, 3 wt%, 4 wt%, 5 wt%, 6 wt%, 7 wt%, 8 wt% or 9 wt%. Unlisted values within this range are also applicable.

In the present application, based on the mass of the solvent being 100%, the mass fraction of methyl ethyl carbonate in the solvent is not higher than 36.4 wt%, for example, but not limited to, 5 wt%, 10 wt%, 15 wt%, 20 wt%, 25 wt%, 30 wt%, 35 wt% or 36.4 wt%. Unlisted values within this range are also applicable.

In the present application, based on the mass of the solvent being 100%, the mass fraction of dimethyl carbonate in the solvent is not higher than 36.4 wt%, for example, but not limited to, 5 wt%, 10 wt%, 15 wt%, 20 wt%, 25 wt%, 30 wt%, 35 wt% or 36.4 wt%. Unlisted values within this range are also applicable.

In another implementation, the present application provides a method for preparing the electrolyte described above. The preparation method includes the following step.

A lithium salt, a low-viscosity solvent, a main solvent, and a film-forming additive are mixed to obtain the electrolyte.

In some embodiments, the preparation method includes: the low-viscosity solvent and the main solvent are subjected to first mixing to obtain a solvent; the obtained solvent and the lithium salt are subjected to second mixing to obtain a preliminary electrolyte; and the obtained preliminary electrolyte and the film-forming additive are subjected to third mixing to obtain the electrolyte.

In another implementation, the present application provides a lithium battery. The lithium battery includes the electrolyte described above.

The electrolyte meets $0.35 \leq \dfrac{100 * PD * A_{dd}}{W} \leq 1.30$.

The electrolyte in the lithium battery provided by the present application meets $0.35 \leq \dfrac{100 * PD * A_{dd}}{W} \leq 1.30$.

For positive electrode sheets with different compaction densities, the contents of a low-viscosity solvent and a film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, that is, the lithium battery has lower interface impedance and better lithium-ion transport performance, and the lithium battery also demonstrates excellent high-temperature cycling stability.

In some embodiments, the positive electrode active material in the positive electrode sheet includes lithium iron manganese phosphate. The single-sided areal density of the positive electrode sheet is 200-260 $g/m^2$, for example, but not limited to, 200 $g/m^2$, 205 $g/m^2$, 210 $g/m^2$, 215 $g/m^2$, 220 $g/m^2$, 225 $g/m^2$, 230 $g/m^2$, 235 $g/m^2$, 240 $g/m^2$, 245 $g/m^2$, 250 $g/m^2$, 255 $g/m^2$ or 260 $g/m^2$. Unlisted values within this range are also applicable. Optionally, the single-sided areal density of the positive electrode sheet is 210-250 $g/m^2$.

In some embodiments, the negative electrode sheet of the lithium battery includes a graphite negative electrode. The graphite negative electrode has a compaction density of 1.55-1.75 $g/cm^3$, for example, but not limited to, 1.55 $g/cm^3$, 1.58 $g/cm^3$, 1.60 $g/cm^3$, 1.62 $g/cm^3$, 1.65 $g/cm^3$, 1.68 $g/cm^3$, 1.70 $g/cm^3$, 1.72 $g/cm^3$ or 1.75 $g/cm^3$. Unlisted values within this range are also applicable. The graphite negative electrode has a single-sided areal density of 80-110 $g/m^2$.

In some embodiments, the injection coefficient of the electrolyte in the lithium battery is 3.0-5.0 g/Ah, for example, but not limited to, 3.0 g/Ah, 3.2 g/Ah, 3.5 g/Ah, 3.8 g/Ah, 4.0 g/Ah, 4.2 g/Ah, 4.5 g/Ah, 4.8 g/Ah or 5.0 g/Ah. Unlisted values within this range are also applicable. Optionally, the injection coefficient of the electrolyte in the lithium battery is 3.5-4.5 g/Ah.

The lithium battery in the present application includes a positive electrode sheet, a negative electrode sheet, a separator, and an electrolyte. During the charge-discharge process of the lithium battery, lithium ions repeatedly intercalate into and deintercalate from the positive electrode sheet and the negative electrode sheet. The separator placed between the positive electrode sheet and the negative electrode sheet serves to prevent short circuits between the positive and negative electrodes while allowing the passage of active ions. The electrolyte functions to conduct active ions between the positive electrode sheet and the negative electrode sheet.

In some embodiments, the positive electrode of the lithium battery includes a positive electrode current collector and a positive electrode coating layer disposed on at least one side of the positive electrode current collector. The compaction density of the positive electrode sheet has its commonly understood meaning in the art and can be tested using known equipment and methods in the art. The compaction density of the positive electrode sheet = areal density of the positive electrode coating layer/thickness of the single-sided positive electrode coating layer. The areal density of the positive electrode sheet also has its commonly understood meaning in the art and can be tested using known equipment and methods in the art. For example, a single-sided coated and cold-pressed positive electrode sheet may be taken (if the positive electrode sheet is a double-side coated, the positive electrode coating layer on one side may be wiped off first), punched into a small disk, and weighed; then, the positive electrode coating layer of the above weighed positive electrode sheet is wiped off, and the weight of the current collector is measured. The areal density of the positive electrode sheet = (weight of the small disk - weight of the current collector)/area of the small disk.

In some embodiments, the positive electrode coating layer may optionally further include a positive electrode conductive agent. The present application does not impose particular limitations on the type of the positive electrode conductive agent. As examples, the positive electrode conductive agent includes at least one of super conductive carbon, conductive graphite, acetylene black, carbon black, Ketjen black, carbon dots, carbon nanotubes, graphene or carbon nanofibers.

In some embodiments, the positive electrode coating layer may optionally further include a positive electrode binder. The present application does not impose particular limitations on the type of the positive electrode binder. As examples, the positive electrode binder may include at least one of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resins.

In some embodiments, the positive electrode current collector may be a metal foil or a composite current collector. As an example of the metal foil, aluminum foil may be used. The composite current collector may include a polymer material base layer and a metal material layer formed on at least one surface of the polymer material base layer. As examples, the metal material may include at least one of aluminum, an aluminum alloy, nickel, a nickel alloy, titanium, a titanium alloy, silver or a silver alloy. As examples, the polymer material base layer may include at least one of polypropylene, polyethylene terephthalate, polybutylene terephthalate, polystyrene or polyethylene.

The positive electrode coating layer is usually formed by applying a positive electrode slurry onto the positive electrode current collector and then performing drying and cold pressing. The positive electrode slurry is typically formed by dispersing a positive electrode active material, an optional conductive agent, an optional binder, and any other components in a solvent and uniformly mixing. The solvent may be $N$-methylpyrrolidone, but is not limited thereto.

In some embodiments, the negative electrode of the lithium battery includes a negative electrode current collector and a negative electrode coating layer disposed on at least one side of the negative electrode current collector.

In some embodiments, the negative electrode coating layer may optionally further include a negative electrode conductive agent. The present application does not impose particular limitations on the type of the negative electrode conductive agent. As examples, the negative electrode conductive agent includes at least one of super conductive carbon, conductive graphite, acetylene black, carbon black, Ketjen black, carbon dots, carbon nanotubes, graphene or carbon nanofibers.

In some embodiments, the negative electrode coating layer may optionally further include a negative electrode binder. The present application does not impose particular limitations on the type of the negative electrode binder. As examples, the negative electrode binder may include at least one of styrene-butadiene rubber, a water-soluble unsaturated resin, or a water-based acrylic resin (for example, polyacrylic acid, polymethacrylic acid, sodium polyacrylate, polyacrylamide, polyvinyl alcohol, sodium alginate, and carboxymethyl chitosan.

In some embodiments, the negative electrode current collector may be a metal foil or a composite current collector. As an example of the metal foil, copper foil may be used. The composite current collector may include a polymer material base layer and a metal material layer formed on at least one surface of the polymer material base layer. As examples, the metal material may include at least one of copper, a copper alloy, nickel, a nickel alloy, titanium, a titanium alloy, silver or a silver alloy. As examples, the polymer material base layer may include at least one of polypropylene, polyethylene terephthalate, polybutylene terephthalate, polystyrene or polyethylene.

The negative electrode coating layer is usually formed by applying a negative electrode slurry onto the electrode current collector and performing drying and cold pressing. The negative electrode slurry is typically formed by dispersing a negative electrode active material, an optional conductive agent, an optional binder, and other optional auxiliaries in a solvent and uniformly mixing. The solvent may be N-methylpyrrolidone or deionized water, but is not limited thereto.

The negative electrode sheet does not exclude additional functional layers other than the negative electrode coating layer. For example, in some embodiments, the negative electrode sheet further includes a conductive undercoat layer (for example, composed of a conductive agent and a binder) sandwiched between the negative electrode current collector and the negative electrode coating layer and disposed on the surface of the negative electrode current collector. In some embodiments, the negative electrode sheet of the present application further includes a protective layer covering the surface of the negative electrode coating layer.

In the lithium battery in the present application, no particular limitation is posed on the type of the separator used, and any known porous structure separator with good chemical stability and mechanical stability may be adopted.

In some embodiments, the material of the separator may include at least one of glass fiber, non-woven fabric, polyethylene, polypropylene or polyvinylidene fluoride. The separator may be a single-layer film or a multilayer composite film. When the separator is a multilayer composite film, the materials of layers may be the same or different.

In some embodiments, the positive electrode sheet, the separator, the negative electrode sheet, and the electrolyte may be assembled into a lithium battery.

In some embodiments, the outer packaging of the lithium battery may be a hard shell, such as a hard plastic shell, an aluminum shell or a steel shell. The outer package of the battery monomer may also be a soft pack, such as a pouch-type soft pack. The material of the soft pack may be plastic, such as at least one of polypropylene, polybutylene terephthalate or polybutylene succinate.

In another implementation, the present application provides an electric device. The electric device includes the electrolyte described above.

Example 1

This example provides an electrolyte. The electrolyte included a lithium salt, a solvent, and a film-forming additive. The solvent was composed of a low-viscosity solvent (ethyl acetate) having a viscosity of 0.45 mPa·s and a main solvent.

The electrolyte met $\frac{100*PD*A_{dd}}{W} = 0.46$.

PD was the compaction density of the positive electrode sheet in a lithium battery, in units of $g/cm^3$; based on the mass of the solvent being 100%, W was the mass fraction of the low-viscosity solvent (ethyl acetate) in the solvent, in units of wt%; $A_{dd}$ was the ratio of the mass of the film-forming additive in the electrolyte to the total mass of the lithium salt and the solvent.

PD was 2.3; W was 18; $A_{dd}$ was 0.036; PD:W = 0.128; and $A_{dd}$:W = 0.0020.

The lithium salt included $LiPF_6$ having a concentration of 0.6 mol/L and LiFSI having a concentration 0.6 mol/L.

The film-forming additive included vinylene carbonate, fluoroethylene carbonate, lithium difluoro(oxalato)borate, and ethylene sulfate. Based on the mass of the film-forming additive being 100%, in the film-forming additive, the mass fraction of vinylene carbonate was 60%, the mass fraction of fluoroethylene carbonate was 10 wt%, the mass fraction of lithium difluoro(oxalato)borate was 10 wt%, and the mass fraction of ethylene sulfate was 20 wt%.

The main solvent included ethylene carbonate, propylene carbonate, methyl ethyl carbonate, and dimethyl carbonate. Based on the mass of the main solvent being 100%, in the main solvent, the mass fraction of ethylene carbonate was 60 wt%, the mass fraction of propylene carbonate was 5 wt%, the mass fraction of methyl ethyl carbonate was 20 wt%, and the mass fraction of dimethyl carbonate was 15 wt%.

This example further provides a lithium battery including the electrolyte described above. The positive electrode active material in the positive electrode sheet of the lithium battery included lithium iron manganese phosphate. The single-sided areal density of the positive electrode sheet was 230 $g/m^2$.

The electrolyte met $\frac{100*PD*A_{dd}}{W} = 0.46$.

The negative electrode sheet of the lithium battery included a graphite negative electrode. The graphite negative electrode had a compaction density of 1.65 $g/cm^3$ and a single-sided areal density of 95 $g/m^2$.

The injection coefficient of the electrolyte of the lithium battery was 4 g/Ah.

Example 2

This example provides an electrolyte. The electrolyte included a lithium salt, a solvent, and a film-forming additive. The solvent was composed of a low-viscosity solvent (ethyl acetate) having a viscosity of 0.45 mPa·s and a main solvent.

The electrolyte met $\frac{100*PD*A_{dd}}{W} = 0.39$.

PD was the compaction density of the positive electrode sheet in a lithium battery, in units of $g/cm^3$; based on the mass of the solvent being 100%, W was the mass fraction of the low-viscosity solvent (ethyl acetate) in the solvent, in units of wt%; $A_{dd}$ was the ratio of the mass of the film-forming additive in the electrolyte to the total mass of the lithium salt and the solvent.

PD was 2.5; W was 25; $A_{dd}$ was 0.039; PD:W = 0.100; and $A_{dd}$:W = 0.0016.

The lithium salt included $LiPF_6$ having a concentration of 0.4 mol/L and LiFSI having a concentration 0.8 mol/L.

The film-forming additive included vinylene carbonate, fluoroethylene carbonate, lithium difluoro(oxalato)borate, and ethylene sulfate. Based on the mass of the film-forming additive being 100%, in the film-forming additive, the mass fraction of vinylene carbonate was 70%, the mass fraction of fluoroethylene carbonate was 10 wt%, the mass fraction of lithium difluoro(oxalato)borate was 10 wt%, and the mass fraction of ethylene sulfate was 10 wt%.

The main solvent included ethylene carbonate, propylene carbonate, methyl ethyl carbonate, and dimethyl carbonate. Based on the mass of the main solvent being 100%, in the main solvent, the mass fraction of ethylene carbonate was 40 wt%, the mass fraction of propylene carbonate was 6 wt%, the mass fraction of methyl ethyl carbonate was not higher than 24 wt%, and the mass fraction of dimethyl carbonate was 30 wt%.

This example further provides a lithium battery including the electrolyte described above. The positive electrode active material in the positive electrode sheet of the lithium battery included lithium iron manganese phosphate. The single-sided areal density of the positive electrode sheet was 250 g/m$^2$.

The electrolyte met $\dfrac{100*PD*A_{dd}}{W} = 0.39$ .

The negative electrode sheet of the lithium battery included a graphite negative electrode. The graphite negative electrode had a compaction density of o 1.60 g/cm$^3$ and a single-sided areal density of 90 g/m$^2$.

The injection coefficient of the electrolyte of the lithium battery was 3.5 g/Ah.

Example 3

This example provides an electrolyte. The electrolyte included a lithium salt, a solvent, and a film-forming additive. The solvent was composed of a low-viscosity solvent (ethyl acetate) having a viscosity of 0.45 mPa·s and a main solvent.

The electrolyte met $\dfrac{100*PD*A_{dd}}{W} = 0.73$ .

PD was the compaction density of the positive electrode sheet in a lithium battery, in units of g/cm$^3$; based on the mass of the solvent being 100%, W was the mass fraction of the low-viscosity solvent (ethyl acetate) in the solvent, in units of wt%; $A_{dd}$ was the ratio of the mass of the film-forming additive in the electrolyte to the total mass of the lithium salt and the solvent.

PD was 2.2; W was 10; $A_{dd}$ was 0.033; PD:W = 0.220; and $A_{dd}$:W = 0.0033.

The lithium salt included LiPF$_6$ having a concentration of 0.8 mol/L and LiFSI having a concentration 0.4 mol/L.

The film-forming additive included vinylene carbonate, fluoroethylene carbonate, lithium difluoro(oxalato)borate, and ethylene sulfate. Based on the mass of the film-forming additive being 100%, in the film-forming additive, the mass fraction of vinylene carbonate was 50%, the mass fraction of fluoroethylene carbonate was not higher than 18 wt%, the mass fraction of lithium difluoro(oxalato)borate was 10 wt%, and the mass fraction of ethylene sulfate was 22 wt%.

The main solvent included ethylene carbonate, propylene carbonate, methyl ethyl carbonate, and dimethyl carbonate. Based on the mass of the main solvent being 100%, in the main solvent, the mass fraction of ethylene carbonate was 30 wt%, the mass fraction of propylene carbonate was 9.0 wt%, the mass fraction of methyl ethyl carbonate was not higher than 30 wt%, and the mass fraction of dimethyl carbonate was 31 wt%.

This example further provides a lithium battery including the electrolyte described above. The positive electrode active material in the positive electrode sheet of the lithium battery included lithium iron manganese phosphate. The single-sided areal density of the positive electrode sheet was 210 g/m$^2$.

The electrolyte met $\dfrac{100*PD*A_{dd}}{W} = 0.73$ .

The negative electrode sheet of the lithium battery included a graphite negative electrode. The graphite negative electrode had a compaction density of o 1.70 g/cm$^3$ and a single-sided areal density of 100 g/m$^2$.

The injection coefficient of the electrolyte of the lithium battery was 4.5 g/Ah.

Example 4

This example provides an electrolyte. The electrolyte included a lithium salt, a solvent, and a film-forming additive. The solvent was composed of a low-viscosity solvent (ethyl propionate) having a viscosity of 0.40 mPa·s and a main solvent.

The electrolyte met $\dfrac{100*PD*A_{dd}}{W} = 1.30$ .

PD was the compaction density of the positive electrode sheet in a lithium battery, in units of g/cm$^3$; based on the mass of the solvent being 100%, W was the mass fraction of the low-viscosity solvent (ethyl propionate) in the solvent, in units of wt%; $A_{dd}$ was the ratio of the mass of the film-forming additive in the electrolyte to the total mass of the lithium salt and the solvent.

PD was 2.1; W was 5; $A_{dd}$ was 0.031; PD:W = 0.420; and $A_{dd}$:W = 0.0062.

The lithium salt included $LiPF_6$ having a concentration of 1 mol/L and LiFSI having a concentration 0.3 mol/L.

The film-forming additive included vinylene carbonate, fluoroethylene carbonate, lithium difluoro(oxalato)borate, and ethylene sulfate. Based on the mass of the film-forming additive being 100%, in the film-forming additive, the mass fraction of vinylene carbonate was 46.5%, the mass fraction of fluoroethylene carbonate was 18.6 wt%, the mass fraction of lithium difluoro(oxalato)borate was 11.6 wt%, and the mass fraction of ethylene sulfate was 23.3 wt%.

The main solvent included ethylene carbonate, propylene carbonate, methyl ethyl carbonate, and dimethyl carbonate. Based on the mass of the main solvent being 100%, in the main solvent, the mass fraction of ethylene carbonate was 80 wt%, the mass fraction of propylene carbonate was 2 wt%, the mass fraction of methyl ethyl carbonate was 10 wt%, and the mass fraction of dimethyl carbonate was 8 wt%.

This example further provides a lithium battery including the electrolyte described above. The positive electrode active material in the positive electrode sheet of the lithium battery included lithium iron manganese phosphate. The single-sided areal density of the positive electrode sheet was 200 g/m².

The electrolyte met $\dfrac{100*PD*A_{dd}}{W} = 1.30$ .

The negative electrode sheet of the lithium battery included a graphite negative electrode. The graphite negative electrode had a compaction density of o 1.55 g/cm³ and a single-sided areal density of 80 g/m².

The injection coefficient of the electrolyte of the lithium battery was 5.0 g/Ah.

Example 5

This example provides an electrolyte. The electrolyte included a lithium salt, a solvent, and a film-forming additive. The solvent was composed of a low-viscosity solvent (methyl propionate) having a viscosity of 0.50 mPa·s and a main solvent.

The electrolyte met $\dfrac{100*PD*A_{dd}}{W} = 0.35$ .

PD was the compaction density of the positive electrode sheet in a lithium battery, in units of g/cm³; based on the mass of the solvent being 100%, W was the mass fraction of the low-viscosity solvent (methyl propionate) in the solvent, in units of wt%; $A_{dd}$ was the ratio of the mass of the film-forming additive in the electrolyte to the total mass of the lithium salt and the solvent.

PD was 2.6; W was 30; $A_{dd}$ was 0.041; PD:W = 0.087; and $A_{dd}$:W = 0.0014.

The lithium salt included $LiPF_6$ having a concentration of 0.3 mol/L and LiFSI having a concentration 1 mol/L.

The film-forming additive included vinylene carbonate, fluoroethylene carbonate, lithium difluoro(oxalato)borate, and ethylene sulfate. Based on the mass of the film-forming additive being 100%, in the film-forming additive, the mass fraction of vinylene carbonate was 60%, the mass fraction of fluoroethylene carbonate was 10 wt%, the mass fraction of lithium difluoro(oxalato)borate was 10 wt%, and the mass fraction of ethylene sulfate was 20 wt%.

The main solvent included ethylene carbonate, propylene carbonate, methyl ethyl carbonate, and dimethyl carbonate. Based on the mass of the main solvent being 100%, in the main solvent, the mass fraction of ethylene carbonate was 18.2 wt%, the mass fraction of propylene carbonate was 9.0 wt%, the mass fraction of methyl ethyl carbonate was 36.4 wt%, and the mass fraction of dimethyl carbonate was 36.4 wt%.

This example further provides a lithium battery including the electrolyte described above. The positive electrode active material in the positive electrode sheet of the lithium battery included lithium iron manganese phosphate. The single-sided areal density of the positive electrode sheet was 260 g/m².

The electrolyte met $\dfrac{100*PD*A_{dd}}{W} = 0.35$ .

The negative electrode sheet of the lithium battery included a graphite negative electrode. The graphite negative electrode had a compaction density of o 1.75 g/cm³ and a single-sided areal density of 110 g/m².

The injection coefficient of the electrolyte of the lithium battery was 3.0 g/Ah.

Example 6

This example provides an electrolyte. The electrolyte was identical to the electrolyte of Example 1 except that PD was 2.3, W was 28, $A_{dd}$ was 0.056, PD:W = 0.082, $A_{dd}$:W = 0.0020, and $\frac{100*PD*A_{dd}}{W}=0.46$ .

This example further provides a lithium battery. The lithium battery was identical to the lithium battery of Example 1 except that an electrolyte used in the lithium battery was the electrolyte of this example.

Example 7

This example provides an electrolyte. The electrolyte was identical to the electrolyte of Example 1 except that PD was 2.3, W was 5.1, $A_{dd}$ was 0.010, PD:W = 0.45, $A_{dd}$:W = 0.0020, and $\frac{100*PD*A_{dd}}{W}=0.45$ .

This example further provides a lithium battery. The lithium battery was identical to the lithium battery of Example 1 except that an electrolyte used in the lithium battery was the electrolyte of this example.

Example 8

This example provides an electrolyte. The electrolyte was identical to the electrolyte of Example 1 except that PD was 2.95, W was 23, $A_{dd}$ was 0.028, PD:W = 0.128, $A_{dd}$:W = 0.0012, and $\frac{100*PD*A_{dd}}{W}=0.36$ .

This example further provides a lithium battery. The lithium battery was identical to the lithium battery of Example 1 except that an electrolyte used in the lithium battery was the electrolyte of this example.

Example 9

This example provides an electrolyte. The electrolyte was identical to the electrolyte of Example 1 except that PD was 2, W was 16, $A_{dd}$ was 0.102, PD:W = 0.128, $A_{dd}$:W = 0.0064, and $\frac{100*PD*A_{dd}}{W}=1.275$ .

This example further provides a lithium battery. The lithium battery was identical to the lithium battery of Example 1 except that an electrolyte used in the lithium battery was the electrolyte of this example.

Example 10

This example provides an electrolyte. The electrolyte was identical to the electrolyte of Example 1 except that the low-viscosity solvent was ethyl formate having a viscosity of 0.30 mPa·s.
This example further provides a lithium battery. The lithium battery was identical to the lithium battery of Example 1 except that an electrolyte used in the lithium battery was the electrolyte of this example.

Comparative Example 1

This example provides an electrolyte. The electrolyte was identical to the electrolyte of Example 1 except that PD was 2.3, W was 18, $A_{dd}$ was 0.0252, PD:W = 0.128, $A_{dd}$:W = 0.0014, and $\frac{100*PD*A_{dd}}{W}=0.32$ .

This example further provides a lithium battery. The lithium battery was identical to the lithium battery of Example 1 except that an electrolyte used in the lithium battery was the electrolyte of this example.

Comparative Example 2

This example provides an electrolyte. The electrolyte was identical to the electrolyte of Example 1 except that PD was 2.3, W was 18, $A_{dd}$ was 0.106, PD:W = 0.128, $A_{dd}$:W = 0.0059, and $\frac{100*PD*A_{dd}}{W}=1.35$ .

This example further provides a lithium battery. The lithium battery was identical to the lithium battery of Example 1 except that an electrolyte used in the lithium battery was the electrolyte of this example.

Comparative Example 3

This example provides an electrolyte. The electrolyte was identical to the electrolyte of Example 1 except that PD was 2.3, W was 15, $A_{dd}$ was 0.011, PD:W = 0.153, $A_{dd}$:W = 0.0007, and $\frac{100*PD*A_{dd}}{W}=0.17$.

This example further provides a lithium battery. The lithium battery was identical to the lithium battery of Example 1 except that an electrolyte used in the lithium battery was the electrolyte of this example.

Comparative Example 4

This example provides an electrolyte. The electrolyte was identical to the electrolyte of Example 1 except that the low-viscosity solvent (ethyl acetate) in the solvent was omitted, that is, the low-viscosity solvent was replaced with an equivalent mass of the main solvent.

This example further provides a lithium battery. The lithium battery was identical to the lithium battery of Example 1 except that an electrolyte used in the lithium battery was the electrolyte of this example.

Comparative Example 5

This example provides an electrolyte. The electrolyte was identical to the electrolyte of Example 1 except that the low-viscosity solvent was methyl propyl carbonate having a viscosity of 0.60 mPa·s.

This example further provides a lithium battery. The lithium battery was identical to the lithium battery of Example 1 except that an electrolyte used in the lithium battery was the electrolyte of this example.

The lithium batteries provided in the above examples and comparative examples were subjected to rate capability testing, current resistance testing, and high-temperature cycling stability testing.

The rate capability test method is as follows: At 25 °C, the battery was fully charged and discharged. The test steps are: the battery was let rest for 30 min; the battery was subjected to constant-current constant-voltage charging with a current of 0.33C and a constant voltage of 4.2 V until the cut-off current reached 0.05C (where C was the designed capacity of the battery); the above cycle was repeated three times, and the capacity of the last cycle was recorded as Q (the calibrated capacity); the battery was let rest for 1 h and subjected to constant-current constant-voltage charging with a current of 0.33Q and a constant voltage of 4.2 V until the cut-off current reached 0.05Q; after the battery was let rest for 30 min, the battery was subjected to discharging with a constant current of 3 Q, and the discharging capacity was recorded as Q1. The 3C discharge rate capability of the lithium battery, expressed as Q1/Q, is shown in Table 1.

The direct current resistance test method is as follows: At 25 °C, the battery was fully charged and discharged. The test steps are: the battery was let rest for 30 min; the battery was subjected to constant-current constant-voltage charging with a current of 0.33C and a constant voltage of 4.2 V until the cut-off current reached 0.05 C (where C was the designed capacity of the battery); the above cycle was repeated three times, and the capacity of the last cycle was recorded as Q (the calibrated capacity); the battery was let rest for 1 h and subjected to constant-current constant-voltage charging with a current of 0.33Q and a constant voltage of 4.2 V until the cut-off current reached 0.05Q; after the battery was let rest for 30 min, the battery was subjected to discharging with a constant current of 0.33Q to 50% of state of charge (SOC), let rest again for 1 h, and finally subjected to discharging with a constant current of 1 Q for 30 s; the battery was tested for the direct current resistance. The measured direct current resistance (DCR) of the battery is shown in Table 1.

The high-temperature cycling stability test method is as follows: At 45 °C, the battery was fully charged and discharged. The test steps are: the battery was let rest for 30 min; the battery was subjected to constant-current constant-voltage charging with a current of 0.33C and a constant voltage of 4.2 V until the cut-off current reached 0.05 C (where C was the designed capacity of the battery); the above cycle was repeated three times, and the capacity of the last cycle was recorded as Q (the calibrated capacity); the battery was let rest for 1 h and subjected to constant-current constant-voltage charging with a current of 1Q and a constant voltage of 4.2 V until the cut-off current reached 0.05Q; the battery was then let rest for 1 h; the battery was subjected to discharging with a constant current of 1Q. This charge-discharge cycle was repeated 1000 times, and the capacity retention rate after 1000 cycles at 45 °C is shown in Table 1.

Table 1

| | DCR at 25 °C (mΩ) | 3C rate capability at 25 °C (%) | Capacity retention rate at 45 °C (%) |
|---|---|---|---|
| Example 1 | 85.63 | 63.26 | 89.35 |
| Example 2 | 85.65 | 63.24 | 89.03 |
| Example 3 | 85.64 | 63.25 | 89.12 |

(continued)

|  | DCR at 25 °C (mΩ) | 3C rate capability at 25 °C (%) | Capacity retention rate at 45 °C (%) |
|---|---|---|---|
| Example 4 | 85.91 | 63.15 | 88.80 |
| Example 5 | 85.88 | 63.17 | 88.83 |
| Example 6 | 88.54 | 61.24 | 87.59 |
| Example 7 | 88.71 | 61.01 | 87.51 |
| Example 8 | 88.82 | 60.90 | 87.46 |
| Example 9 | 88.96 | 60.83 | 87.40 |
| Example 10 | 85.35 | 62.93 | 86.31 |
| Comparative Example 1 | 89.23 | 59.92 | 84.03 |
| Comparative Example 2 | 89.99 | 59.65 | 83.91 |
| Comparative Example 3 | 90.23 | 59.02 | 83.86 |
| Comparative Example 4 | 85.23 | 63.35 | 82.11 |
| Comparative Example 5 | 90.02 | 59.11 | 82.92 |

The following can be obtained from Table 1.

(1) The lithium batteries provided in Examples 1 to 3 of the present application exhibit low direct current resistance, high 3C rate capability, and strong high-temperature cycling stability.

(2) As can be seen from the comparison between Examples 1 to 3 and Examples 4 and 5, when the lithium battery meets the optional condition of $0.39 \leq \frac{100*PD*A_{dd}}{W} \leq 0.73$, where $0.100 \leq PD{:}W \leq 0.220$, $0.0016 \leq A_{dd}{:}W \leq 0.0033$, PD is 2.2-2.5, W is 10-25, and $A_{dd}$ is 0.033-0.039, the lithium battery demonstrates even more excellent electrochemical performance.

(3) As can be seen from the comparison between Example 1 and Examples 6 and 7, when $0.087 \leq PD{:}W \leq 0.420$, the electrolyte exhibits superior cycling performance. This is because when $0.087 \leq PD{:}W$, the excessive low-viscosity solvent is avoided, thereby preventing the poor dissociation capacity of the lithium salt due to the low dielectric constant of the low-viscosity solvent and high oxidative decomposition caused by the weak antioxidant capacity of the low-viscosity solvent; when $PD{:}W \leq 0.420$, the low-viscosity solvent can sufficiently reduce the viscosity of the electrolyte, thereby improving the infiltration effect of the electrolyte on the positive electrode sheet, reducing the interfacial impedance in the lithium battery, and enhancing lithium-ion transport performance.

(4) As can be seen from the comparison between Example 1 and Examples 8 and 9, when $0.0014 \leq A_{dd}{:}W \leq 0.0062$, the lithium battery exhibits superior cycling performance. This is because when the value of $A_{dd}{:}W$ is within this range, the additive amount of the film-forming additive is appropriate, which can form more stable CEI and SEI films to improve high-temperature cycling performance, enable the CEI and SEI films to have suitable thicknesses to maintain good lithium-ion transport performance of the lithium battery, and help reduce the production cost of the lithium battery.

(5) As can be seen from the comparison between Example 1 and Example 10, in the present application, the viscosity of the low-viscosity solvent affects the performance of the lithium battery. When the low-viscosity solvent has a viscosity of 0.40-0.50 mPa·s, by optimizing the ion transport, interfacial wettability, and solvation structure, high ionic conductivity, low interfacial impedance, and stability over a wide temperature range of the electrolyte are achieved, and utimately improving the rate performance and high-temperature cycling performance of the battery. The above viscosity range represents the optimal window for balancing kinetics and thermodynamics.

(6) As can be seen from the comparison between Example 1 and Comparative Examples 1 to 4, the electrolyte in the lithium battery provided by the present application meets $0.35 \leq \frac{100*PD*A_{dd}}{W} \leq 1.30$. For positive electrode sheets with different compaction densities, the contents of the low-viscosity solvent and the film-forming additive in the corresponding electrolyte can be determined through calculation, thereby obtaining a matched electrolyte. After a lithium battery is prepared using the positive electrode sheet and the matched electrolyte, the electrolyte exhibits good wettability on the positive electrode sheet, that is, the lithium battery has lower interface impedance and better lithium-ion transport performance, and the lithium battery also demonstrates excellent high-temperature cycling stability.

**Claims**

1. An electrolyte, comprising a lithium salt, a solvent, and a film-forming additive, wherein the solvent comprises a low-viscosity solvent having a viscosity of 0.50 mPa·s or less;

   the electrolyte meets $0.35 \leq \dfrac{100*PD*A_{dd}}{W} \leq 1.30$; wherein PD is 2.1-2.6, and PD is a compaction density value of a positive electrode sheet in a lithium battery matched with the electrolyte, and unit of the compaction density is g/cm$^3$; and
   based on a mass of the solvent being 100%, W is a mass fraction of the low-viscosity solvent in the solvent, in units of wt%, and $A_{dd}$ is a ratio of a mass of the film-forming additive in the electrolyte to a total mass of the lithium salt and the solvent.

2. The electrolyte according to claim 1, wherein the electrolyte meets $0.39 \leq \dfrac{100*PD*A_{dd}}{W} \leq 0.73$.

3. The electrolyte according to claim 1, wherein $0.087 \leq PD:W \leq 0.420$, and optionally, $0.100 \leq PD:W \leq 0.220$.

4. The electrolyte according to claim 1, wherein $0.0014 \leq A_{dd}:W \leq 0.0062$, and optionally, $0.0016 \leq A_{dd}:W \leq 0.0033$.

5. The electrolyte according to claim 1, wherein PD is 2.2-2.5;

   optionally, W is 5-30, and optionally, is 10-25; and
   optionally, $A_{dd}$ is 0.031-0.041, and optionally, is 0.033-0.039.

6. The electrolyte according to claim 1, wherein the lithium salt comprises $LiPF_6$ and LiFSI; and optionally, a concentration of $LiPF_6$ in the electrolyte is 0.3-1 mol/L, and a concentration of LiFSI is 0.3-1 mol/L.

7. The electrolyte according to claim 1, wherein the film-forming additive comprises vinylene carbonate.

8. The electrolyte according to claim 1, wherein the low-viscosity solvent has a viscosity of 0.40-0.50 mPa·s; and optionally, the low-viscosity solvent comprises any one or a combination of at least two of ethyl acetate, methyl propionate, or ethyl propionate.

9. A method for preparing the electrolyte according to any one of claims 1 to 8, comprising:
   mixing a lithium salt, a low-viscosity solvent, a main solvent, and a film-forming additive to obtain the electrolyte.

10. The preparation method according to claim 9, wherein the preparation method comprises:

    subjecting the low-viscosity solvent and the main solvent to first mixing to obtain a solvent;
    subjecting the obtained solvent and the lithium salt to second mixing to obtain a preliminary electrolyte; and
    subjecting the obtained preliminary electrolyte and the film-forming additive to third mixing to obtain the electrolyte.

11. A lithium battery, comprising the electrolyte according to any one of claims 1 to 8;

    wherein the electrolyte meets $0.35 \leq \dfrac{100*PD*A_{dd}}{W} \leq 1.30$.

12. The lithium battery according to claim 11, wherein a positive electrode active material in a positive electrode sheet of the lithium battery comprises lithium iron manganese phosphate, and a single-sided areal density of the positive electrode sheet is 200-260 g/m$^2$, and optionally, is 210-250 g/m$^2$.

13. The lithium battery according to claim 11, wherein a negative electrode sheet of the lithium battery comprises a graphite negative electrode, and the graphite negative electrode has a compaction density of 1.55-1.75 g/cm$^3$ and a single-sided areal density of 80-110 g/m$^2$.

14. The lithium battery according to claim 11, wherein an injection coefficient of the electrolyte of the lithium battery is 3.0-5.0 g/Ah, and optionally, is 3.5-4.5 g/Ah.

15. An electric device, comprising the lithium battery according to any one of claims 11 to 14.

## INTERNATIONAL SEARCH REPORT

| International application No. |
| --- |
| **PCT/CN2025/119709** |

**A.    CLASSIFICATION OF SUBJECT MATTER**

H01M10/0569(2010.01)i;  H01M10/0567(2010.01)i;  H01M10/42(2006.01)i;  H01M10/0525(2010.01)i

According to International Patent Classification (IPC) or to both national classification and IPC

**B.    FIELDS SEARCHED**

Minimum documentation searched (classification system followed by classification symbols)

IPC:H01M10

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI, ISI_Web of Science: 电解液, 正极极片, 压实密度, 压密, 成膜添加剂, 锂盐, 溶剂, 粘度, 乙酸乙酯, 丙酸甲酯, 丙酸乙酯, electrolyte, compact+ density, positive pole piece, film forming additive?, lithium, solvent, viscosity, ethyl acetate, methyl propionate, ethyl propionate

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 120527469 A (EVE ENERGY CO., LTD.) 22 August 2025 (2025-08-22)<br>claims 1-10 | 1-15 |
| X | CN 119029298 A (TIANJIN LISHEN NEW ENERGY TECHNOLOGY CO., LTD.) 26 November 2024 (2024-11-26)<br>description, embodiment 3, and paragraph 28 | 1-15 |
| X | CN 109065950 A (HEFEI GOTION HIGH-TECH POWER ENERGY CO., LTD.) 21 December 2018 (2018-12-21)<br>description, embodiments 1 and 5 | 1-15 |
| X | CN 119230914 A (SVOLT ENERGY TECHNOLOGY CO., LTD.) 31 December 2024 (2024-12-31)<br>description, embodiments 1-3 | 1-2, 4-15 |
| A | CN 119230914 A (SVOLT ENERGY TECHNOLOGY CO., LTD.) 31 December 2024 (2024-12-31)<br>description, embodiments 1-3 | 3 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 February 2026** | **08 February 2026** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/119709**

| C. | DOCUMENTS CONSIDERED TO BE RELEVANT | | |
|---|---|---|---|
| Category* | Citation of document, with indication, where appropriate, of the relevant passages | | Relevant to claim No. |
| A | CN 119253076 A (JIANGSU ZENERGY BATTERY TECHNOLOGIES GROUP CO., LTD.) 03 January 2025 (2025-01-03) entire document | | 1-15 |
| A | CN 109119685 A (NINGDE CONTEMPORARY AMPEREX TECHNOLOGY CO., LTD.) 01 January 2019 (2019-01-01) entire document | | 1-15 |

Form PCT/ISA/210 (second sheet) (July 2022)

**INTERNATIONAL SEARCH REPORT**
**Information on patent family members**

International application No.

**PCT/CN2025/119709**

| Patent document cited in search report | | | Publication date (day/month/year) | Patent family member(s) | | | Publication date (day/month/year) |
|---|---|---|---|---|---|---|---|
| CN | 120527469 | A | 22 August 2025 | None | | | |
| CN | 119029298 | A | 26 November 2024 | None | | | |
| CN | 109065950 | A | 21 December 2018 | None | | | |
| CN | 119230914 | A | 31 December 2024 | None | | | |
| CN | 119253076 | A | 03 January 2025 | None | | | |
| CN | 109119685 | A | 01 January 2019 | EP | 3419096 | A1 | 26 December 2018 |
| | | | | EP | 3419096 | B1 | 23 September 2020 |
| | | | | US | 2018375154 | A1 | 27 December 2018 |

Form PCT/ISA/210 (patent family annex) (July 2022)

**REFERENCES CITED IN THE DESCRIPTION**

**Patent documents cited in the description**

- CN 202510742268
- CN 119230914 A

- CN 116259834 A